# EUROPEAN PATENT SPECIFICATION

(11) **EP 4 206 484 B1**
(45) Date of publication and mention of the grant of the patent: **18.12.2024**
(21) Application number: 22000267.9
(22) Date of filing: 23.12.2022
(51) Int. Cl.: F16D 3/10, F16D 35/00, F16D 47/02, F16D 47/06, F16D 33/00

(54) **A MULTI-STAGE FLEXIBLE BALL COUPLING, PARTICULARLY FOR REVERSIBLE DRIVES**
MEHRSTUFIGE FLEXIBLE KUGELKUPPLUNG, INSBESONDERE FÜR REVERSIERBARE ANTRIEBE
ACCOUPLEMENT À ROTULE FLEXIBLE À PLUSIEURS ÉTAGES, EN PARTICULIER POUR DES ENTRAÎNEMENTS RÉVERSIBLES

(30) Priority: 28.12.2021 PL 44002521
(43) Date of publication of application: 05.07.2023
(73) Proprietor: Politechnika Slaska, 44-100 Gliwice (PL)
(72) Inventor: Mikula, Jaroslaw, 44-100 GLIWICE (PL); Kuczaj, Mariusz, 44-121 GLIWICE (PL); Filipowicz, Krzysztof, 42-580 WOJKOWICE (PL); Mikula, Stanislaw, 44-100 GLIWICE (PL)

(56) References cited:
- PL-A1- 432 631

## Description

This invention relates to a multi-stage flexible ball coupling, particularly for reversible drives.

The solution relates to a mechanical coupling with high torsional flexibility and a reduced mass of inertia, intended for use primarily with reversible drives, i.e. ones in which each subsequent start-up is in the direction of rotation opposite to the previous one. In such drive systems, there is often a need for the torsional flexibility of the coupling to be equal in both directions of rotation and as high as possible, with starting resistance as low as possible. The above is true of drives used in machinery such as the power trains of gantries, heavy-duty hangar gates, railway turntables, gate valves, tipper trucks, sluices as well as some other transport equipment. Therefore, state-of-the-art solutions are often unsuitable for such applications, and the drives must have large surplus power to overcome high starting loads. Steady-state motion fails to use the full power of the drives, which is particularly disadvantageous for drives powered by electric motors due to a significant drop in the power factor of cosrp.

State-of-the-art designs of flexible mechanical couplings mainly rely on the flexibility and elasticity of rubber, polymer or composite components. Coupling designs are given a broad overview in: Markusik S. "Mechanical couplings", WNT, Warsaw 1979. The utilisation of flexible couplings in service machinery drives is described in: Markusik S., Opasiak T., Gruszka P. "Drives for continuous transport machines with a flexible coupling", Transport Przemyslowy, No. 1/2006. Selected flexible coupling designs are also described in the academic textbook by Dietrich M., Markusik S. "Fundamentals of machine design", WNT 1999. A description of various coupling designs can also be found in the work of Skoć A., Spalek J., Markusik S.: "Fundamentals of machine design" vol. 2, WNT Warsaw 2008, including a flexible coupling relying on polymer elasticity, as well as powder couplings.

The state - of - the - art solution PL 432631 A1 is known. It is multi-stage starting clutch with high torsional flexibility and low moment of inertia. It has end discs and at least one intermediate disc loosely mounted on the shaft, equipped with coupling balls, wherein the end discs and intermediate discs are equipped with spiral grooves.

All state-of-the-art designs of flexible mechanical couplings possess limited torsional flexibility, in addition to having a short service life. Coupling designs utilising polymeric materials fall short of the requirement of complete non-flammability, preventing their use in deep mining. State-of-the-art coupling designs generate longitudinal loads on the coupled drivetrain systems with their progressing wear and tear. Also, progressing wear and tear of these couplings often results in excessive vibration and noise.

This invention relates to a multi-stage flexible ball coupling characteristic in that it has end discs, a cover and intermediate discs housed in bearings on the shaft, coupled to each other by means of balls placed in arched ducts provided in the the end discs, intermediate discs and the end disc, and the end disc and cover being connected by a housing and having reinforcing ribs.

The interior of the multi-stage coupling is filled with liquid. The coupling has slotted nozzles. The coupling has notches in the intermediate discs.

The solution according to the invention fulfils the requirements by having a special multi-stage coupling design with high torsional flexibility, with balls mating with the arched ducts of a semi-circular cross-section used as couplers for the successive stages.

The figure illustrates an embodiment of the coupling according to the invention, wherein 1 is a longitudinal half-section of a seven-stage coupling with the coupler balls in an intermediate position, 2 is a cross-section along the A-A plane, and 3 is a detail of an embodiment of the inter-duct nozzle.

The shaft 1 has a cover 9 mounted on a keyed joint 11 and a series of intermediate discs 4 loosely housed in bearings on bushings 12, coupled to each other with the balls 3. The coupler balls 3 have the capability to perform a rolling motion inside the arched ducts 10 serving as guides provided in all the discs. The last in the series of balls couples the last of the intermediate discs 4 with the end shield 6 mounted on a shaft 7, for example by means of spacer rings 8. The end shield 6 and the cover 9 are connected in a housing 14, forming together a hermetically insulated system sealed by a rotary sealant ring15 and gaskets 16. The shaft 1 is housed in a tapered roller bearing 17. Advantageously, the interior of the coupling is filled with a liquid, advantageously a high-viscosity oil.

The oil serves as a lubricant for the mating components such as the roller bearing 17, coupler balls 3, bushings 12 of the intermediate disc bearings as well as the sliding end bearing 13. Additionally, the oil helps to dissipate the heat from the operating machinery and oil pumping. This is ensured by the notches 18 in the intermediate discs 4, which force the oil to move faster. The heat is then transferred through the housing 14, advantageously made of Al alloy with good thermal conductivity. The heat is then dissipated to the environment by radiation and convection, a process helped by the longitudinal ribs 19. The ribs 19 act to reinforce and stiffen the housing 14, while also magnifying heat exchange with the environment by convection as the coupling spins. The presence of oil inside the coupling plays the essential role of viscous damping of excessively fast ball movement within the arched ducts 10.

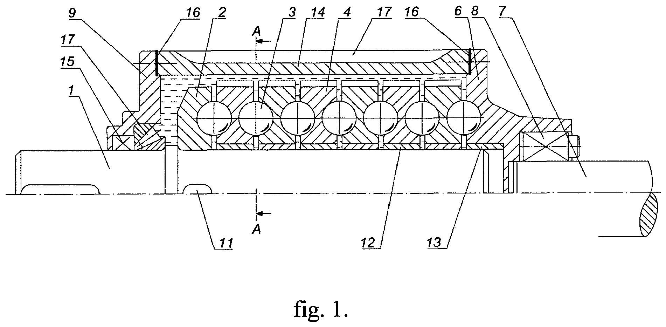

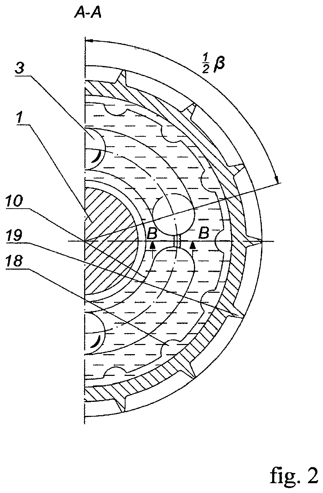

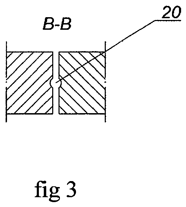

The coupling operates in such a way that torque is transmitted sequentially from the end disc 6 or cover 9, depending on which side of the coupling happens to be the driving side. The discs are engaged sequentially, with each stage achieving torsional flexibility determined by the angle of 2β (Fig. 2). The total combined torsional flexibility of the entire coupling unit is equal to the number of degrees multiplied by the angle of 2β. In the embodiment illustrated in Fig. 1 and Fig.2, the angle is 0-160°, therefore total flexibility is 7x160°x2=2240°, which amounts to more than 6 complete rotations of the end discs relative to each other. In the position as in Fig. 1 and Fig.2, the torsional flexibility of the coupling in both directions of rotation equals half of the total flexibility of the entire coupling.

When successive coupling stages are put into operation at start-up, a periodic coupling effect occurs, analogous to the operation of state-of-the-art torque converters. When the coupling is used according to the invention, this effect makes the start-up process significantly smoother. The hydrokinetic and viscous coupling effect is magnified with higher oil viscosity and smaller clearances between the rotating components of the coupling. The presence of oil in the coupling means that the abrasive wear of rotating components of the coupling is largely eliminated. The coupling components only work together at start-up and under light loads. In applications with coupler balls, the steel balls in the roller ball bearings are virtually indestructible under typical operating conditions. It is possible to use balls retrieved from second-hand roller bearings as long as they show no signs of damage such as pitting. The plain bearing shells of the intermediate discs, advantageously made of bronze, engage in torsional movement at start-up only. The load on the bearing shells is low, as the coupling discs only transmit torque. The ducts in the discs are more susceptible to abrasive wear. To minimise abrasive wear on the discs, it is advantageous to make them from ductile iron or ADI cast iron. The design of the coupling allows easy compensation of disc wear even under operating conditions. In order to achieve this, the thickness of the gaskets 16 must be reduced accordingly and only on one side without oil spillage. The compensated play will automatically distribute itself evenly to all discs due to their loose mounting on the shaft 1.

For special applications, e.g. where the use of oil is not acceptable for fire-safety reasons, the coupling can be filled with another non-flammable liquid. It is also possible to use Teflon coatings for the ducts and apply plastic grease only, advantageously with the addition of graphite or M0S2. Completely "dry" operation is also acceptable. At each stage of its operation, the coupling is subject to full static and dynamic balancing. In order to equalise the instantaneous oil pressure peaks in both of the dual arched ducts, especially in the extreme positions, the slotted nozzle 20 is provided optionally. The design form of the coupling allows for constant full balancing of the longitudinal forces, which means that the coupling does not generate external longitudinal loads, instead transmitting torque only. The coupling is characteristic in that it has a small deadweight moment of inertia and therefore a small deadweight starting load. In addition, the mass moment of inertia of the entire coupling can be significantly reduced if light alloys (Mg-Al) are used for the housing and the steel coupler balls are be replaced with lighter ceramic ones. The intermediate discs can be made lighter, e.g. from textolite, which additionally allows the bearing bushings 12 to be dispensed with.

The design of the coupling allows its easy adaptation to specific requirements by adjusting the number of stages. In the basic design variant, the coupling has two stages, i.e. it has one intermediate disc 4. The number of stages can be changed by simply replacing the shaft 1 and adjusting the length of the housing 14. It is also possible to make modifications to coupling parameters such as torque transmission and single-stage torsional flexibility. If a greater number of ducts and single-stage balls are used in place of the two ducts (upper and lower 10) as in Fig.2, an increase in the transmitted load is achieved at the expense of a reduction in the torsional flexibility obtained from a single coupling stage. The transmission of the load through coupler balls operating in ducts of a semi-circular cross-section and a spherical shape achieves low contact pressures of the mating components due to the large, favourably shaped contact surface at the nominal load of the coupling.

The coupling according to the invention is designed particularly for operation in reversing drives wherein the direction of rotation at each subsequent start-up is opposite to the previous one. The coupler balls then automatically move into the most favourable position to ensure full torsional flexibility at each subsequent start-up. It is also possible to use the coupling in drivetrains with one direction of rotation. The coupler balls must then be brought back to their original position before the next start-up. This can be achieved in a number of ways. When the reduced mass moment of inertia of the driven system and the coast-down time after motor shutdown are greater than the same parameters of the driving system (usually the motor itself), the favourable alignment of the coupler balls occurs automatically during coast-down and the coupling is ready for restart. In drive systems where this is not an issue, the opposite direction of rotation of the motor can be switched on (if permitted) for a very short time, preferably at a reduced external load. This will cause the desired movement of the coupler balls to the starting position. Another method is to manually rotate the motor drive shaft in reverse by an angle at least equal to the full torsional flexibility.

The same effect can be achieved by rotating the shaft of the driven side in the direction of main movement with the motor stopped. The coupling is completely reversible in terms of the direction of power transmission. Thanks to its design, it is possible to achieve exactly the same dynamic starting characteristics in both directions of energy transmission. For this purpose, it is only necessary to select the geometrical and material parameters of the coupling components in such a way that the mass moment of inertia of the shaft 1 with the end disc 2 is the same as the combined moment of inertia of the end disc 6 and the cover 9 including the housing 14.

The coupling design ensures that the coupler balls are always spaced evenly, symmetrically distributed with respect to the axis of rotation during start-up and operation. This results in the coupling being fully statically and dynamically balanced in order not to generate lateral dynamic forces from vibrations in the drive train.

The coupling is completely maintenance-free and has a long service life, as its active components remain at rest during steady-state motion. It can be used over a wide temperature range without significant deterioration of performance.

The use of the coupling according to the invention makes it possible to significantly reduce the needed surplus power of the drive motors due to starting. This allows better use of the energy of drives, especially with electric motors. Reducing dynamic surpluses serves to improve the service life of all driveline components, including mechanical transmissions and motors. It also improves working safety conditions.

## Claims

1. A multi-stage flexible ball coupling for coupling a first shaft (1) to a second shaft (2) comprising: a first end disc (2) and a second end disc (6),
a cover (9) as well as intermediate discs (4) housed in bearings on the first shaft (1), said intermediate discs (4) being coupled
to each other with balls (3) placed in arched ducts (10) provided in said first end disc (2), said intermediate discs (4) and said second end disc (6), and
**characterised in that**, said second end disc (6) and said cover (9) are connected by a housing (14) having reinforcing ribs (19).

2. A multi-stage flexible coupling according to claim 1, **characterised in that** its interior is filled with liquid.

3. A multi-stage flexible coupling according to claims 1 and 2, **characterised in that** it has slotted nozzles (20).

4. A multi-stage flexible coupling according to claim 1, **characterised in that** it has notches (18) in the intermediate discs (4).

## Patentansprüche

1. Eine mehrstufige flexible Kugelkupplung zum Kuppeln einer ersten Welle (1) mit einer zweiten Welle (2), bestehend aus: einer ersten Endscheibe (2) und einer zweiten Scheibe (6), einer Abdeckung (9) sowie Zwischenscheiben (4), die sich in Lagern auf der ersten Welle (1) befinden, wobei die Zwischenscheiben (4) miteinander mit Kugeln (3) gekoppelt sind, die in gewölbten Kanälen (10) in der ersten Endscheibe (2), den Zwischenscheiben (4) und der zweiten Endscheibe (6) angeordnet sind, **gekennzeichnet dadurch, dass** die zweite Endscheibe (6) und die Abdeckung (9) durch ein Gehäuse (14) verbunden sind, das mit Verstärkungsrippen (19) ausgestattet ist.

2. Eine mehrstufige, flexible Kupplung gemäß Anspruch 1, **gekennzeichnet dadurch, dass** ihr Inneres mit Flüssigkeit gefüllt ist.

3. Eine mehrstufige, flexible Kupplung gemäß den Ansprüchen 1 und 2, **gekennzeichnet dadurch, dass** sie Schlitzdüsen (20) aufweist.

4. Eine mehrstufige, flexible Kupplung gemäß Anspruch 1, **gekennzeichnet dadurch, dass** sie Kerben (18) in den Zwischenscheiben (4) aufweist.

## Revendications

1. Embrayage flexible à plusieurs étages à billes pour accouplement de premier arbre (1) et de deuxième arbre (2) se composant d'un disque terminal (2) et d'un deuxième disque (6), d'un couvercle (9) et des disques intermédiaires (4) situés dans les roulements sur le premier arbre (1), lesdits disques intermédiaires (4) étant accouplés entre eux par les billes (3) situées dans des canaux cambrés (10) situés dans ledit premier disque terminal (2), lesdits disques intermédiaires (4) et ledit deuxième disque terminal (6) et **caractérisé en ce que** ledit deuxième disque terminal (6) et ledit couvercle (9) sont connectés par le boîtier (14) muni des nervures de renforcement (19).

2. Embrayage flexible à plusieurs étages selon la revendication 1, **caractérisé en ce que** son intérieur est rempli de liquide.

3. Embrayage flexible à plusieurs étages selon les revendications 1 et 2, **caractérisé en ce qu'**il possède les buses à fentes (20).

4. Embrayage flexible à plusieurs étages selon la revendication 1, **caractérisé en ce qu'**il possède les entailles (18) dans les disques intermédiaires (4).
